# EUROPEAN PATENT APPLICATION

(11) **EP 4 737 043 A2**
(43) Date of publication of application: **06.05.2026**
(21) Application number: 25208640.0
(22) Date of filing: 14.10.2025
(51) Int. Cl.: B23K 9/10

(54) **BATTERY-POWERED WELDING MACHINE**

(30) Priority: 14.10.2024 US 202463706818 P; 12.08.2025 US 202519297084
(71) Applicant: Lincoln Global, Inc., Cleveland, OH 44117 (US)
(72) Inventor: MAKOSKY, Justin M., Hiram, 44234 (US); SLESINGER, Andrew J., Cuyahoga Falls, 44221 (US); WINARSKI, Nicholas F., Lakewood, 44107 (US); CRESCENZE, Samuel P., Westerville, 43081 (US); CHAUDHAR, Pankajkumar H., Mayfield Heights, 44124 (US)
(74) Representative: Hoyng Rokh Monegier B.V.

(57) **Abstract**

A battery-powered welding machine includes a battery, charging circuitry operatively connected to the battery, and output circuitry operatively connected to the battery to receive electrical energy therefrom to create a welding arc. The output circuitry includes a bleed circuit to selectively discharge residual energy in the output circuitry. An isolation switch is connected between battery and the output circuitry to selectively connect and disconnect the battery from the output circuitry. A control system is operatively connected to the isolation switch to control operations of the isolation switch, and operatively connected to the bleed circuit to control discharging of the residual energy in the output circuitry. The control system is configured to detect a high voltage condition within the output circuitry and, when the high voltage condition is detected, automatically operate the isolation switch to disconnect the battery from the output circuitry, and automatically activate the bleed circuit to discharge the residual energy.

## Description

### CROSS-REFERENCE TO RELATED APPLICATIONS

The present application claims priority to U.S. Provisional Patent Application Serial Number 63/706,818 filed on October 14, 2024, the disclosure of which is incorporated herein by reference, to U.S. Non-Provisional Patent Application Serial Number 19/297,084 filed on August 12, 2025, the disclosure of which is incorporated herein by reference.

### BACKGROUND OF THE INVENTION

The present invention relates to welding machines, and in particular to battery-powered welding machines and control of the charging and discharging of the machine's battery or battery pack. A failure within the battery-powered welding machine can result in the full battery voltage level and/or an abnormally high current level being present at the output of the machine, which may be undesirable. Moreover, the welding operation can create undesirable voltage fluctuations at battery charging circuitry. Thus, improvements to battery-powered welding machines that address one or more of such deficiencies would be beneficial.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided a battery-powered welding machine. The battery-powered welding machine includes a battery, charging circuitry operatively connected to the battery to charge the battery, and output circuitry operatively connected to the battery to receive electrical energy from the battery to create a welding arc. The output circuitry includes a bleed circuit to selectively discharge residual energy in the output circuitry. An isolation switch is connected between battery and the output circuitry to selectively connect and disconnect the battery from the output circuitry. A control system is operatively connected to the isolation switch to control operations of the isolation switch, and operatively connected to the bleed circuit to control discharging of the residual energy in the output circuitry. The control system is configured to detect a high voltage condition within the output circuitry and, when the high voltage condition is detected, automatically operate the isolation switch to disconnect the battery from the output circuitry, and automatically activate the bleed circuit to discharge the residual energy in the output circuitry.

In various embodiments a battery voltage level supplied to the output circuitry is greater than 60 V.

In various embodiments the output circuitry includes a chopper.

In various embodiments the battery-powered welding machine comprises: a current sensor operatively connected to the control system, wherein the current sensor provides a welding current level signal to the control system, and the control system is configured to detect a high current condition within the output circuitry and, when the high current condition is detected, automatically operate the isolation switch to disconnect the battery from the output circuitry.

In various embodiments the battery-powered welding machine comprises: an additional isolation switch that is connected between battery and the charging circuitry to selectively connect and disconnect the battery from the charging circuitry; and a current sensor operatively connected to the control system, wherein the current sensor provides a welding current level signal to the control system, and the control system is configured automatically operate the additional isolation switch to disconnect the battery from the charging circuitry during a welding operation.

In various embodiments the welding operation is shielded metal arc welding or gas tungsten arc welding.

In various embodiments the control system is configured to automatically operate the additional isolation switch to disconnect the battery from the charging circuitry based on the welding current level signal,

In various embodiments the residual energy is stored in a capacitor, and the bleed circuit includes a resistor for discharging the capacitor.

In accordance with another aspect of the present invention, provided is a battery-powered welding machine. The battery-powered welding machine includes a battery, charging circuitry operatively connected to the battery to charge the battery, and output circuitry operatively connected to the battery to receive electrical energy from the battery to create a welding arc. The output circuitry includes a bleed circuit to selectively discharge residual energy in the output circuitry. A current sensor generates a welding current level signal. An isolation switch is connected between battery and the charging circuitry to selectively connect and disconnect the battery from the charging circuitry. A controller is operatively connected to the isolation switch to control operations of the isolation switch. The controller is configured automatically operate the isolation switch to disconnect the battery from the charging circuitry during a welding operation.

In various embodiments a battery voltage level supplied to the output circuitry is greater than 60 V;

In various embodiments the output circuitry includes a chopper.

In various embodiments the welding operation is shielded metal arc welding or gas tungsten arc welding.

In various embodiments the controller is configured to automatically operate the isolation switch to disconnect the battery from the charging circuitry based on the welding current level signal,

In various embodiments the residual energy is stored in a capacitor, and the bleed circuit includes a resistor for discharging the capacitor.

In accordance with another aspect of the present invention, provided is a battery-powered welding machine. The battery-powered welding machine includes a battery, charging circuitry operatively connected to the battery to charge the battery, and output circuitry operatively connected to the battery to receive electrical energy from the battery to create a welding arc. A first isolation switch is connected between battery and the output circuitry to selectively connect and disconnect the battery from the output circuitry. A second isolation switch is connected between battery and the charging circuitry to selectively connect and disconnect the battery from the charging circuitry. A controller is operatively connected to the first isolation switch to control operations of the first isolation switch, and operatively connected to the second isolation switch to control operations of the second isolation switch. The controller is configured to automatically operate the second isolation switch to disconnect the battery from the charging circuitry during a welding operation. The controller is further configured to detect a high voltage condition within the output circuitry and, when the high voltage condition is detected, automatically operate the first isolation switch to disconnect the battery from the output circuitry.

In various embodiments a battery voltage level supplied to the output circuitry is greater than 60 V.

In various embodiments the output circuitry includes a chopper.

In various embodiments the welding operation is shielded metal arc welding or gas tungsten arc welding.

In various embodiments the battery-powered welding, further comprises a current sensor operatively connected to the controller, wherein the current sensor provides a welding current level signal to the controller, and wherein the controller is configured to automatically operate the second isolation switch to disconnect the battery from the charging circuitry based on the welding current level signal.

In various embodiments the controller is further configured to detect a high current condition within the output circuitry and, when the high current condition is detected, automatically operate the first isolation switch to disconnect the battery from the output circuitry.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows a battery-powered welding machine; and
FIG. 2 shows a schematic circuit diagram of a battery-powered welding machine.

### DETAILED DESCRIPTION OF THE INVENTION

The present invention relates to battery-powered welding machines. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

While embodiments of the present invention described herein are discussed in the context of shielded metal arc welding (SMAW) and gas tungsten arc welding (GTAW), other embodiments of the invention are not limited thereto. For example, embodiments of the invention could be utilized in gas metal arc welding (GMAW), flux-cored arc welding (FCAW), and/or metal-cored arc welding (MCAW) systems. Embodiments of the present invention could also be used in metal deposition operations that are similar to welding, such hardfacing, and cladding. As used herein, the term "welding" is intended to encompass all of these technologies as they all involve material deposition to either join or build up a workpiece. Therefore, in the interests of efficiency, the term "welding" is used below in the description of exemplary embodiments, but is intended to include all of these material deposition operations, whether or not joining of multiple workpieces occurs. Embodiments of the present invention could also be used in plasma cutting operations or systems.

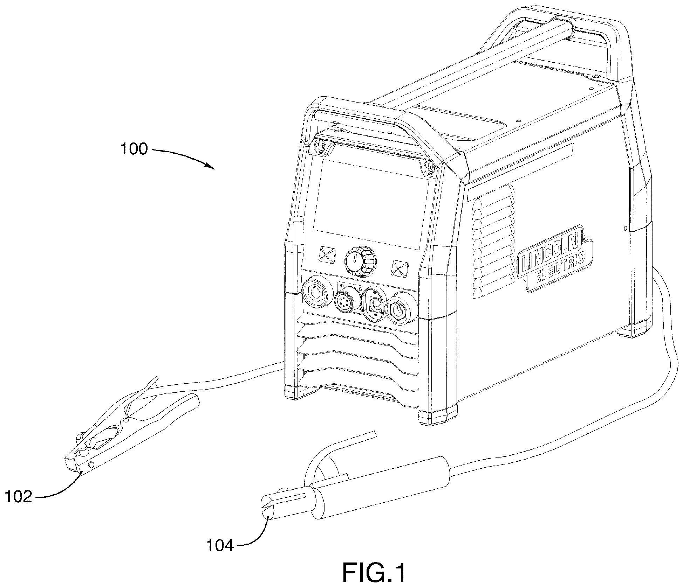

Figure 1 shows an example battery-powered welding machine 100. The welding machine 100 includes a work clamp 102 for connecting to a workpiece or welding table, and an electrode holder 104. The welding machine 100 in Fig. 1 is configured for SMAW welding, but could be configured for GTAW or other welding operations by changing the welding torch and selecting the appropriate welding process and parameters via the user interface on the welding machine.

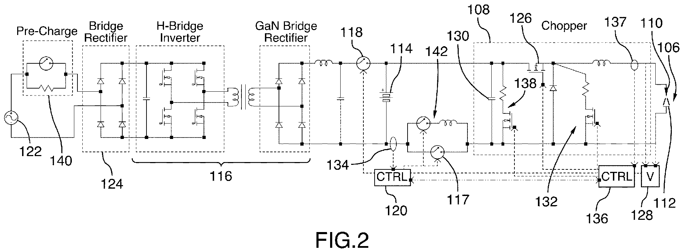

Figure 2 is a schematic diagram of the power circuitry of an example battery-powered welding machine. The load in Fig. 2 is located at the output of a welding circuit and is primarily an electrical arc 106, generated during a welding operation, between a torch 110 (e.g., an electrode holder or "stinger" holding a welding rod, a GTAW torch, a GMAW torch, etc.) and a workpiece 112. The chopper circuitry 108 controls the welding output voltage and/or current for the welding operation as is known in the art. Electrical power for the welding operation is provided by a battery 114 or battery pack. The battery 114 or battery pack (hereinafter "battery") can include multiple batteries connected together. In certain embodiments, the battery 114 is integral with the welding machine and is not intended to be removed for recharging, and the welding machine itself includes charging circuitry 116 and a battery management system to control charging of the battery. The charging circuitry 116 is operatively connected to the battery 114 to charge the battery. In an example embodiment, the charging circuitry 116 can include, among other things, an inverter (e.g., an H-bridge inverter), a transformer, and a rectifier as shown, to provide an appropriate DC voltage level to charge the battery 114. The charging circuitry 116 shown in Fig. 2 is one example of the charging circuitry that could be employed in the welding machine, and one of ordinary skill in the art will appreciate that other charging circuits or circuit configurations could be used.

The battery 114 voltage level can be significantly higher than the desired welding voltage level. For example, the welding voltage level provided to the torch 110 could be in a range of 20-30 V. However, the battery 114 voltage level provided to the chopper circuitry 108 could be over twice that, such as greater than 60 V or greater than 90 V. In an example embodiment, the battery 114 supplies electrical power to the chopper circuitry 108 at approximately 96 VDC. The chopper 108 is part of the output circuitry that is operatively connected to the battery 114 to receive electrical energy from the battery to create a welding arc 106. The chopper 108 is powered by the battery 114 and reduces the battery voltage level to a level suitable for the welding operation.

The battery 114 can be selectively connected to and isolated or disconnected from the chopper circuitry 108 by a first controllable isolation switch 117, such as a transistor switch. The isolation switch 117 is connected between the battery 114 and the output chopper circuitry 108 to selectively connect and disconnect the battery from the output circuitry. In Fig. 2, the isolation switch 117 is located along the negative return path to the battery 114, but it could be located along the positive output of the battery if desired. The battery 114 can also be selectively connected to and disconnected from the charging circuitry 116 by a second controllable isolation switch 118. The second isolation switch 118 is connected between battery 114 and the charging circuitry 116 to selectively connect and disconnect the battery from the charging circuitry. In Fig. 2, the second isolation switch 118 is located along the positive supply path to the battery 114, but it could be located along the negative return path to the charging circuitry 116 if desired. Operations of the isolation switches 117, 118 can be controlled by a controller 120 or control system, as discussed herein.

The controller 120 can be an electronic controller and can include one or more processors. For example, the controller 120 can include one or more of a microprocessor, a microcontroller, a digital signal processor (DSP), an application specific integrated circuit (ASIC), a field-programmable gate array (FPGA), discrete logic circuitry, or the like. The controller 120 can further include memory and may store program instructions that cause the controller to provide the functionality ascribed to it herein. The memory may include one or more volatile, non-volatile, magnetic, optical, or electrical media, such as read-only memory (ROM), random access memory (RAM), electrically-erasable programmable ROM (EEPROM), flash memory, or the like. The controller 120 can further include one or more analog-to-digital (A/D) converters for processing various analog inputs to the controller.

To recharge the battery 114, the welding machine can be connected to a source of AC electrical power 122, such as utility power or the output of a generator. In Fig. 2, the source of AC electrical power 122 is shown as 110 V, but it is to be appreciated that the source of AC electrical power could have other appropriate voltage levels, such as 208 V, 220 V, etc. In certain embodiments, the welding machine can include pre-charge circuitry 140 to reduce high inrush currents, reduce electrical stress and protect components, and prevent sparking upon connection to the source of AC electrical power 122. In the example embodiment of Fig. 2, the pre-charge circuitry 140 includes a controllable switch connected in parallel with a resistor. The welding machine can include a rectifier 124 that provides DC power to the charging circuitry 116. In the example embodiment of Fig. 2, the charging circuitry 116 includes an inverter, such as an H-bridge inverter, that supplies power to a transformer and an additional rectifier, to supply DC power at an appropriate voltage/current level to charge the battery 114 when the welding machine is connected to the source of AC electrical power 122.

Welding power is supplied to the torch 110 by the battery 114, regardless of whether or not the welding machine is connected to the source of AC electrical power 122. The battery 114 can be selectively connected to and isolated or disconnected from the chopper circuitry 108 and the charging circuitry 116 by the first and second isolation switches 117, 118, the operations of which are controlled by the controller 120. It is common for the chopper 108 to provide an open circuit voltage (OCV) at the output of the welding machine, between the torch 110 and the workpiece 112, or between the output connections of the welding machine, even when welding is not occurring. For example, if the welding machine is turned on and ready for a welding operation to begin, there will be an OCV at the output of the welding machine. An example normal OCV range is 20-30 VDC.

A fault can occur that can cause the OCV between the torch 110 and the workpiece 112 (or between the output connections of the welding machine) to be higher than the normal OCV range provided by the chopper 108. For example, if the transistor switch 126 within the chopper 108 should short closed, then the OCV will be at the voltage level of the battery 114. A fault could also cause an abnormally high current (e.g., greater than 200A, greater than 250A, greater than 300A, etc.) to flow through the torch 110. Certain regulatory authorities require that when the battery 114 provides a voltage level greater than a threshold level (e.g., 60 VDC), then the no-load OCV (i.e., when active welding is not occurring) must be below another threshold level (e.g., 60 VDC). The controller 120 is configured to monitor the OCV via a voltage sensor 128 that measures the output voltage of the welding machine. If the OCV is abnormally high (e.g., greater than 60 VDC) and welding is not occurring, the controller 120 can determine this condition from the voltage level signal provided by the voltage sensor 128. The controller 120 is operatively connected to the isolation switch 117 to control the operations of the isolation switch. The controller 120 is configured to detect a high voltage condition within the output chopper circuitry 108 by comparing the measured OCV to a threshold voltage level, and, when the high voltage condition is detected, automatically operate the isolation switch 117 to disconnect the battery 114 from the output circuitry. The controller 120 can generate a fault signal or fault condition whenever the chopper 108 is not operating properly. In response to the high OCV fault condition, the controller 120 can automatically disconnect the battery 114 from the chopper 108 by opening the isolation switch 117. In certain embodiments, if active welding is occurring, the controller 120 will not generate the fault signal in response to a high OCV.

The welding machine can include a current sensor 134 (e.g., a current transformer, shunt, etc.) for measuring welding current flow between the battery 114 and chopper 108 or current flow to the torch 110. The current sensor 134 is operatively connected to the controller 120, and the current sensor provides a welding current level signal to the controller. As noted above, a fault in the chopper 108 could cause an abnormally high current to flow through the torch 110. The controller 120 is configured to monitor the welding current level. If the welding current is abnormally high (e.g., greater than a threshold level such as greater than 200A, greater than 250A, greater than 300A, etc.), the controller 120 can determine this condition from the welding current level signal provided by the current sensor 134. The controller 120 is configured to detect a high current condition within the output chopper circuitry 108 by comparing the measured current level to a threshold current level, and, when the high current condition is detected, automatically operate the isolation switch 117 to disconnect the battery 114 from the output circuitry.

In addition to automatically isolating the chopper 108 and battery 114 by opening the isolation switch 117, the controller 120 can also automatically discharge the capacitor 130 in the chopper 108 in response to a high OCV fault condition or a high current fault condition, or in response to other supply-related issues or faults, to discharge the residual energy in the output circuitry of the welding machine. The output circuitry can include a bleed circuit 132, for example having a resistor and a transistor switch, for discharging the energy in the capacitor 130 through the resistor when a high voltage or current condition or other faults are detected in the output circuitry. Figure 2 schematically shows a bleed circuit 132 within the chopper 108. The bleed circuit 132 selectively discharges residual energy in the output circuitry (e.g., energy stored in capacitor 130) of the welding machine under control of the controller 120. The controller 120 is operatively connected to the transistor switch in the bleed circuit 132 to control discharging of the residual energy in the output circuitry 108. When the controller 120 senses a high OCV fault, high current fault, or other fault condition, the controller can automatically disconnect the chopper 108 from the battery 114 via isolation switch 117, and automatically activate the bleed circuit 132 (e.g., turn on the transistor switch in the bleed circuit) to discharge the residual energy from the capacitor 130, which should reduce the OCV to near 0 V. The resistor in the bleed circuit 132 can have a relatively small value, such as 15 ohms for example, to quickly discharge the capacitor 130, such as within a few milliseconds. Quickly discharging the capacitor 130 can be desirable when a high current fault occurs, such as due to a short circuit within the chopper 108.

It can be desirable to disconnect the battery 114 from the charging circuitry 116 during a welding operation, when active welding is occurring, to protect the charging circuitry from voltage fluctuations for example. For this reason, the second isolation switch 118 is connected between battery 114 and the charging circuitry 116 to selectively connect and disconnect the battery from the charging circuitry. The current sensor 134 provides the welding current level signal to the controller 120, and the controller can determine when welding is occurring from the current level. When welding is occurring, there will be welding current flow from the battery 114 through the chopper 108 and to the torch 110. Such welding current flow is sensed by the current sensor 134. The controller 120 is configured automatically operate the second isolation switch 118 to open the switch and disconnect the battery 114 from the charging circuitry 116 during a welding operation based on the welding current level signal from the current sensor 134. Thus, in certain embodiments, battery charging is tied to active welding not occurring. If the welding machine is connected to the electrical power source 122 and welding is not occurring, then the controller 120 will keep the second isolation switch 118 closed to charge the battery 114. If the welding machine is connected to the electrical power source 122 and welding is occurring as indicated by the current level signal from the current sensor 134, then the controller 120 will open the second isolation switch 118 to protect the charging circuitry 116 (e.g., from high voltage fluctuations).

In certain embodiments, the welding machine can include multiple controllers. Figure 2 shows two controllers 120, 136. Controller 120, which is discussed above, can be considered a battery management system controller, while controller 136 can be considered a chopper controller. For example, the chopper controller 136 can control the operation of the transistor switch 126 in the chopper circuitry 108. Together, the two controllers 120, 136 are part of an overall control system for the welding machine. The two controllers 120, 136 can communicate bidirectionally, such as via a CAN bus (controller area network bus) for example, to exchange information such as operating status, fault conditions, operating parameters, and the like. The chopper controller 136 can receive the voltage level signal from the voltage sensor 128 and send the voltage level information to the battery management system controller 120, so that the battery management system controller can monitor the OCV of the welding machine. The chopper controller 136 could also inform the battery management system controller 120 when active welding is occurring, so that the battery management system controller can disconnect the battery 114 from the charging circuitry 116. The chopper circuitry 108 can include an additional current sensor 137 for measuring the welding current level. The current sensor 137 is operatively connected to the chopper controller 136, and the current sensor provides a welding current level signal to the chopper controller.

The chopper circuitry 108 can include an additional bleed circuit 138 that is operated by the chopper controller 136. The additional bleed circuit 138 can be controlled similarly to the bleed circuit 132 discussed above and controlled by the battery management system controller 120. Additionally, when the welding machine is turned off, the chopper controller 136 can activate the transistor switch in the bleed circuit 138 to discharge the capacitor 130 in the chopper. It can be desirable to discharge the capacitor 130 more slowly when the welding machine is turned off than when a high current fault condition is detected. Thus, the resistor in the additional bleed circuit 138 can be larger than the resistor in bleed circuit 132. An example value of the resistor in the additional bleed circuit 138 is 2000 ohms (2 kΩ). In certain embodiments, the additional bleed circuit 138, which has a higher resistance and slower bleed duration than bleed circuit 132, is activated when a high OCV fault condition is detected or when the machine is turned off, and the bleed circuit 132 is activated when a high current fault is detected.

The welding machine can include pre-charge circuits 140, 142 to reduce inrush currents. The first pre-charge circuit 140 has a resistance with a switch in parallel. The resistance prevents high inrush currents, and is switched out by the parallel switch after a short time delay. The second pre-charge circuit 142 has a switch and inductor that are connected in parallel with the isolation switch 117. The isolation switch activates (e.g., closes) after a short time delay upon startup to bypass the pre-charge circuit 142, and the switch in the pre-charge circuit simultaneously opens, to remove the pre-charge circuit inductor from the return path to the battery 114.

In certain embodiments, the welding machine can include an interlock switch that must be closed for the machine to turn on. The interlock switch can be activated or closed only when an outer case or enclosure for the welding machine is properly installed, to protect an operator from exposure to energized components within the welding machine.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A battery-powered welding machine, comprising:
a battery (114);
charging circuitry (116) operatively connected to the battery (114) to charge the battery (114);
output circuitry operatively connected to the battery (114) to receive electrical energy from the battery (114) to create a welding arc (106), wherein the output circuitry includes a bleed circuit to selectively discharge residual energy in the output circuitry;
an isolation switch (118) connected between battery (114) and the output circuitry to selectively connect and disconnect the battery (114) from the output circuitry; and
a control system operatively connected to the isolation switch (118) to control operations of the isolation switch (118), and operatively connected to the bleed circuit to control discharging of the residual energy in the output circuitry,
wherein the control system is configured to detect a high voltage condition within the output circuitry and, when the high voltage condition is detected, automatically operate the isolation switch (118) to disconnect the battery (114) from the output circuitry, and automatically activate the bleed circuit to discharge the residual energy in the output circuitry.

2. The battery-powered welding machine of claim 1, wherein a battery voltage level supplied to the output circuitry is greater than 60 V,
wherein the output circuitry preferably includes a chopper (108).

3. The battery-powered welding machine of claim 2, further comprising:
a current sensor operatively connected to the control system, wherein the current sensor provides a welding current level signal to the control system, and the control system is configured to detect a high current condition within the output circuitry and, when the high current condition is detected, automatically operate the isolation switch (118) to disconnect the battery (114) from the output circuitry.

4. The battery-powered welding machine of any of claims 2 or 3, further comprising:
an additional isolation switch (118) that is connected between battery (114) and the charging circuitry (116) to selectively connect and disconnect the battery (114) from the charging circuitry (116); and
a current sensor operatively connected to the control system, wherein the current sensor provides a welding current level signal to the control system, and the control system is configured automatically operate the additional isolation switch (118) to disconnect the battery (114) from the charging circuitry (116) during a welding operation.

5. The battery-powered welding machine of claim 4, wherein the welding operation is shielded metal arc welding or gas tungsten arc welding.

6. The battery-powered welding machine of any of claims 4 or 5, wherein the control system is configured to automatically operate the additional isolation switch (118) to disconnect the battery (114) from the charging circuitry (116) based on the welding current level signal,
wherein the residual energy preferably is stored in a capacitor, and the bleed circuit includes a resistor for discharging the capacitor.

7. A battery-powered welding machine, comprising:
a battery (114);
charging circuitry (116) operatively connected to the battery (114) to charge the battery (114);
output circuitry operatively connected to the battery (114) to receive electrical energy from the battery (114) to create a welding arc (106), wherein the output circuitry includes a bleed circuit to selectively discharge residual energy in the output circuitry;
a current sensor that generates a welding current level signal;
an isolation switch (118) connected between battery (114) and the charging circuitry (116) to selectively connect and disconnect the battery (114) from the charging circuitry (116); and
a controller operatively connected to the isolation switch (118) to control operations of the isolation switch (118), wherein the controller is configured automatically operate the isolation switch (118) to disconnect the battery (114) from the charging circuitry (116) during a welding operation.

8. The battery-powered welding machine of claim 7, wherein a battery voltage level supplied to the output circuitry is greater than 60 V;
wherein the output circuitry includes a chopper (108); and/or
wherein the welding operation is shielded metal arc welding or gas tungsten arc welding.

9. The battery-powered welding machine of any of claims 7 or 8, wherein the controller is configured to automatically operate the isolation switch (118) to disconnect the battery (114) from the charging circuitry (116) based on the welding current level signal,
wherein the residual energy preferably is stored in a capacitor, and the bleed circuit includes a resistor for discharging the capacitor.

10. A battery-powered welding machine, comprising:
a battery (114);
charging circuitry (116) operatively connected to the battery (114) to charge the battery (114);
output circuitry operatively connected to the battery (114) to receive electrical energy from the battery (114) to create a welding arc (106);
a first isolation switch connected between battery (114) and the output circuitry to selectively connect and disconnect the battery (114) from the output circuitry;
a second isolation switch connected between battery (114) and the charging circuitry (116) to selectively connect and disconnect the battery (114) from the charging circuitry (116); and
a controller operatively connected to the first isolation switch to control operations of the first isolation switch, and operatively connected to the second isolation switch to control operations of the second isolation switch, wherein the controller is configured to automatically operate the second isolation switch to disconnect the battery (114) from the charging circuitry (116) during a welding operation, and
wherein the controller is further configured to detect a high voltage condition within the output circuitry and, when the high voltage condition is detected, automatically operate the first isolation switch to disconnect the battery (114) from the output circuitry.

11. The battery-powered welding machine of claim 10, wherein a battery voltage level supplied to the output circuitry is greater than 60 V;
wherein the output circuitry includes a chopper (108); and/or
wherein the welding operation is shielded metal arc welding or gas tungsten arc welding.

12. The battery-powered welding machine of any of claims 10 or 11, further comprising a current sensor operatively connected to the controller, wherein the current sensor provides a welding current level signal to the controller, and wherein the controller is configured to automatically operate the second isolation switch to disconnect the battery (114) from the charging circuitry (116) based on the welding current level signal.

13. The battery-powered welding machine of any of claims 10 to 12, wherein the controller is further configured to detect a high current condition within the output circuitry and, when the high current condition is detected, automatically operate the first isolation switch to disconnect the battery (114) from the output circuitry.
